(19) Europäisches Patentamt
European Patent Office
Office européen des brevets

(11) EP 4 324 895 A1

(12) EUROPEAN PATENT APPLICATION
published in accordance with Art. 153(4) EPC

(43) Date of publication:
**21.02.2024 Bulletin 2024/08**

(21) Application number: **22788184.4**

(22) Date of filing: **13.04.2022**

(51) International Patent Classification (IPC):
***C09J 11/04*** (2006.01) ***C09J 11/06*** (2006.01)
***H01B 17/56*** (2006.01) ***C08L 101/00*** (2006.01)
***C09J 201/00*** (2006.01) ***H01B 3/40*** (2006.01)
***C08J 5/18*** (2006.01) ***B32B 15/08*** (2006.01)
***C08K 3/00*** (2018.01) ***C09J 7/35*** (2018.01)

(52) Cooperative Patent Classification (CPC):
**B32B 15/08; C08J 5/18; C08K 3/00; C08L 101/00; C09J 7/35; C09J 11/04; C09J 11/06; C09J 201/00; H01B 3/40; H01B 17/56**

(86) International application number:
**PCT/JP2022/017691**

(87) International publication number:
**WO 2022/220261 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2021 JP 2021068665**

(71) Applicant: **SEKISUI CHEMICAL CO., LTD.**
**Osaka-shi**
**Osaka**
**530-8565 (JP)**

(72) Inventors:
- **SHINDO, Masami**
  **Mishima-gun, Osaka 618-0021 (JP)**
- **KOUMA, Aki**
  **Mishima-gun, Osaka 618-0021 (JP)**
- **MIZUNO, Shohei**
  **Mishima-gun, Osaka 618-0021 (JP)**
- **SHINJOU, Takashi**
  **Mishima-gun, Osaka 618-0021 (JP)**
- **WAKIOKA, Sayaka**
  **Mishima-gun, Osaka 618-0021 (JP)**
- **OOWASHI, Keigo**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) INSULATING RESIN SHEET, MULTILAYER BODY AND SEMICONDUCTOR DEVICE

(57) The insulating resin sheet of the present invention includes a curable resin composition including a thermosetting resin, a curing agent and an insulating heat dissipating filler having a thermal conductivity of 10 W/m·K or more, wherein the curing agent is an imide oligomer; a cured product thereof has a thermal decomposition temperature of 280°C or more; and the insulating resin sheet has a thickness of 50 μm or more and 500 μm or less. The present invention can provide an insulating resin sheet having excellent insulating properties and thermal conductivity, high heat resistance and small warpage when used as a substrate.

EP 4 324 895 A1

## Description

### Technical Field

The present invention relates to an insulating resin sheet, a laminate comprising the insulating resin sheet and a semiconductor device comprising the laminate.

### Background Art

Power modules have been used in a wide variety of fields including industrial appliances, home appliances and information devices. For power modules, resin sheet has been attempted to be used as a substrate, and power modules in which resin sheet is used are expected to be used in high voltage applications. Usually excellent insulation properties and excellent thermal conductivity are required for such resin sheet.

Patent Literature 1 discloses an invention relating to an insulating sheet comprising a resin composition layer and flaky inorganic particles having a thermal conductivity of 10 W/m·k or more, wherein one surface side has a higher relative permittivity than the relative permittivity of the other surface side, and a circuit pattern is formed on the one surface side. Patent Literature 1 discloses that the insulating sheet has excellent thermal conductivity and insulation properties.

Patent Literature 2 discloses a method for producing an insulating sheet, comprising stacking and heat pressing two resin sheets comprising an aggregate including boron nitride and an epoxy resin to form an insulating layer, wherein the relationship between thicknesses before and after heat pressing and the viscosity at 175°C are adjusted to a specific range. Patent Literature 2 discloses that an insulating sheet with excellent thermal conductivity and insulation properties can be obtained by the method.

Patent Literature 3 discloses an invention relating to a thermally conductive adhesive composition comprising a polyamide imide oligomer, a thermal cross-linking agent crosslinking the oligomer molecules and thermally conductive inorganic particles comprising boron nitride particles, wherein the number-average molecular weight of the polyamide imide oligomer and the content of the thermal cross-linking agent and the thermally conductive inorganic particles are set to a specific range. Patent Literature 3 discloses that the thermally conductive adhesive composition has excellent thermal conductivity, adhesiveness and heat resistance.

Patent Literature 4 discloses an invention relating to a curable resin composition comprising a curable resin, an imide oligomer and boehmite aluminum hydroxide. Patent Literature 4 discloses that the curable resin composition is highly flame retardant, highly adhesive, and has excellent long-term heat resistance at high temperatures and moisture reflow sensitivity, and has low environmental load.

### Citation List

#### Patent Literature

PTL 1: JP 6844066 B

PTL 2: JP 6214336 B

PTL 3: JP 2017-149910 A

PTL 4: International Publication No. 2019/083006

### Summary of Invention

#### Technical Problem

In recent years, especially for automotive power devices, the resin sheet used as a substrate is required to have high heat resistance and little warpage when used as a substrate, in addition to insulating properties and thermal conductivity.

The conventional resin sheets described above were inadequate in respect of improvement of insulation properties and thermal conductivity, and improvement of heat resistance and suppression of warpage. Thus, there is a need for a resin sheet with a better balance of physical properties.

Accordingly, an object of the present invention is to provide an insulating resin sheet with excellent insulating properties and thermal conductivity, high heat resistance, and small warpage when used as a substrate.

Solution to Problem

The present inventors have conducted intensive studies to achieve the above object. As a result, the present inventors have found that the above problem can be solved by an insulating resin sheet comprising a thermosetting resin, a curing agent and an insulating heat dissipating filler having a thermal conductivity of 10 W/m·K or more, wherein an imide oligomer is used as the curing agent, and a cured product has a predetermined thermal decomposition temperature or more and the insulating resin sheet has a thickness in a specific range, and the present invention has been completed.
Accordingly, the present invention relates to the following [1] to [10].
[1] An insulating resin sheet comprising a curable resin composition comprising a thermosetting resin, a curing agent and an insulating heat dissipating filler having a thermal conductivity of 10 W/m·K or more, the curing agent being an imide oligomer; a cured product thereof having a thermal decomposition temperature of 280°C or more; and the insulating resin sheet having a thickness of 50 μm or more and 500 μm or less.
[2] The insulating resin sheet according to [1] above, wherein the content of the insulating heat dissipating filler is 50% by volume or more.
[3] The insulating resin sheet according to [1] or [2] above, wherein the imide oligomer has a reactive functional group capable of reacting with the thermosetting resin at both ends or one end of the molecule, and the reactive functional group is an acid anhydride group, an amine group or a hydroxyl group.
[4] The insulating resin sheet according to any one of [1] to [3] above, wherein the higher of the softening point and the melting point of the thermosetting resin is 150°C or less.
[5] The insulating resin sheet according to any one of [1] to [4] above, wherein the above imide oligomer does not have a linear saturated hydrocarbon chain having 16 or more carbon atoms in the skeleton.
[6] The insulating resin sheet according to any one of [1] to [5] above, wherein the above imide oligomer has a molecular weight of 500 to 10,000.
[7] A laminate comprising the insulating resin sheet according to any one of [1] to [6] above, a metal base plate and a metal plate, wherein the laminate comprises the insulating resin sheet and the metal plate on the metal base plate in that order.
[8] The laminate according to [7] above, wherein the laminate is a circuit board.
[9] The laminate according to [7] or [8] above, wherein the metal plate has a circuit pattern.
[10] A semiconductor device comprising the laminate according to any one of [7] to [9] above and a semiconductor element provided on the metal plate.

Advantageous Effect of Invention

The present invention can provide an insulating resin sheet with excellent insulating properties and thermal conductivity, high heat resistance and little warpage when used as a substrate.

Brief Description of Drawings

[Fig. 1] Fig. 1 is a schematic cross-sectional view illustrating a laminate according to an embodiment of the present invention.
[Fig. 2] Fig. 2 is a schematic cross-sectional view illustrating a semiconductor device according to an embodiment of the present invention.

Description of Embodiments

<Insulating resin sheet>

The insulating resin sheet comprises a curable resin composition comprising a thermosetting resin, a curing agent and an insulating heat dissipating filler having a thermal conductivity of 10 W/m·K or more, wherein the curing agent is an imide oligomer; a cured product has a thermal decomposition temperature of 280°C or more; and the insulating

resin sheet has a thickness of 50 μm or more and 500 μm or less.

The insulating resin sheet of the present invention is formed of a curable resin composition comprising a thermosetting resin, a curing agent and an insulating heat dissipating filler having a thermal conductivity of 10 W/m·K or more. The insulating resin sheet may be a curable resin composition itself (i.e., a curable resin composition which has not been cured), or may be those obtained by curing the curable resin composition. In other words, the insulating resin sheet of the present invention may be an insulating resin sheet before curing or an insulating resin sheet after curing (including an insulating resin sheet cured in part).

[Thermal decomposition temperature]

The cured product of the insulating resin sheet of the present invention has a thermal decomposition temperature of 280°C or more. When the cured product has a decomposition temperature of less than 280°C, the insulating resin sheet after curing has poor heat resistance. The cured product has a thermal decomposition temperature of preferably 290°C or more, and more preferably 300°C or more from the viewpoint of the improvement of heat resistance of the insulating resin sheet. Although a higher thermal decomposition temperature is preferred, the cured product has a thermal decomposition temperature of usually 550°C or less. The thermal decomposition temperature of the cured product means the thermal decomposition temperature of the insulating resin sheet after a certain heat treatment as described later.

The thermal decomposition temperature may be adjusted to a desired value by controlling the type and the amount of the curing agent to be mixed and the type of the thermosetting resin described later.

The thermal decomposition temperature in the present invention means a temperature at which the weight of the insulating resin sheet is reduced by 1% in thermogravimetric analysis from the weight of the insulating resin sheet before the measurement. Thermogravimetric analysis is performed using 10 mg of a sample of the insulating resin sheet in a nitrogen atmosphere at a flow rate of 100 ml/ minute under conditions of temperature increase from a starting temperature of 30°C to 550°C at a temperature-increasing rate of 10°C/ minute and maintaining the temperature for 5 minutes.

The insulating resin sheet used for the thermogravimetric analysis measurement is heat treated at 150°C for 60 minutes.

[Glass transition temperature]

The cured product of the insulating resin sheet of the present invention has a glass transition temperature of preferably 150°C or more. A glass transition temperature of 150°C or more improves the heat resistance of the insulating resin sheet after curing. The insulating resin sheet has a glass transition temperature of preferably 160°C or more, and more preferably 170°C or more.

The glass transition temperature in the present invention means a peak temperature in a tan δ curve obtained by increasing temperature from 0°C to 300°C at a temperature-increasing rate of 10°C/ minutes at 10 Hz using a dynamic viscoelasticity measuring device.

An insulating resin sheet used for the measurement of dynamic viscoelasticity is heat treated at 150°C for 60 minutes.

[Thermosetting resin]

The thermosetting resin included in the curable resin composition of the present invention is not particularly limited. Examples thereof include an amino resin such as a urea resin and a melamine resin, a phenol resin, a thermosetting urethane resin, an epoxy resin, a phenoxy resin, a thermosetting polyimide resin and an amino alkyd resin. One thermosetting resin may be used alone or two or more of them may be used in combination as the thermosetting resin used for the insulating resin sheet. Of the resins described above, epoxy resin is preferred as the thermosetting resin.

Examples of epoxy resins include a compound having two or more epoxy groups in the molecule. The epoxy resin has a weight average molecular weight of less than 5,000.

Specific examples of epoxy resins include a styrene skeleton-containing epoxy resin, a bisphenol A epoxy resin, a bisphenol F epoxy resin, a bisphenol S epoxy resin, phenol novolac epoxy resin, a biphenol epoxy resin, a naphthalene epoxy resin, a biphenyl epoxy resin, a fluorene epoxy resin, a phenol aralkyl epoxy resin, a naphthol aralkyl epoxy resin, a dicyclopentadiene epoxy resin, an anthracene epoxy resin, an epoxy resin having an adamantane skeleton, an epoxy resin having a tricyclodecane skeleton, an epoxy resin having a triazine nucleus in the skeleton and a glycidyl amine epoxy resin.

The epoxy equivalent of the epoxy resin is not particularly limited, and the epoxy resin has an epoxy equivalent of, for example, 80 g/ eq or more and 500 g/ eq or less, preferably 90 g/ eq or more and 400 g/ eq or less, and more preferably 90 g/ eq or more and 350 g/ eq or less. The epoxy equivalent may be measured by the method according to

JIS K 7236.

One of the above epoxy resins may be used alone, or two or more of them may be used in combination.

The softening point and the melting point of the thermosetting resin are not particularly limited. The higher of the softening point and the melting point of the thermosetting resin is preferably 150°C or less, more preferably 145°C or less, further preferably 130°C or less, and still more preferably 100°C or less from the viewpoint of easy production of the insulating resin sheet.

In the present description, the softening point is measured by the testing method for softening point (ring-and-ball method) according to JIS K 7234. The melting point is measured as the temperature of the endothermic peak when measurement is performed while increasing temperature at 10°C/ minute using a differential scanning calorimeter. EXTEAR DSC6100 (made by SII NanoTechnology) is an example of the differential scanning calorimeter.

The content of the thermosetting resin in the curable resin composition is not particularly limited, and is preferably 10% by volume or more and 40% by volume or less, more preferably 12% by volume or more and 35% by volume or less, and further preferably 15% by volume or more and 30% by volume or less. When the content of the thermosetting resin is the lower limit or more, after curing, the insulating heat dissipating filler is thoroughly bonded to the resin, and thus an insulating resin sheet with the desired form may be prepared. When the content of the thermosetting resin is the upper limit or less, more than a fixed amount of an insulating heat dissipating filler can be mixed, and this improves insulation properties and thermal conductivity. The content of the thermosetting resin in the curable resin composition is the same as the content of the thermosetting resin in the insulation resin sheet.

[Imide oligomer]

The curable resin composition according to the present invention comprises an imide oligomer as a curing agent. Inclusion of the imide oligomer may improve heat resistance of the insulating resin sheet and may suppress warpage of substrates. Although the reason is not clear, those that can form a polymer, such as cyanate and polyimide amide resin, form a polymer and then react with thermosetting resin such as epoxy resin, and thus the polymer has high free volume and crosslinking may be uneven; meanwhile since the imide oligomer does not form a trimer, the imide oligomer does not have high free volume as cyanate does, and this prevents uneven crosslinking. As described above, the reason may be because use of imide oligomer facilitates progress of uniform reaction with the thermosetting resin and uneven crosslinking is less likely to occur.

The imide oligomer according to the present invention is a compound having an imide skeleton in the main chain, preferably an aromatic ring in the skeleton. Having an aromatic ring in the skeleton suppresses thermal decomposition of the insulating resin sheet and thus easily improves heat resistance. Furthermore, it is preferable that the imide oligomer does not have a linear saturated hydrocarbon chain having 16 or more carbon atoms in the skeleton from the viewpoint of improvement of heat resistance.

The imide oligomer according to the present invention has a reactive functional group capable of reacting with the thermosetting resin at both ends or one end of the molecule. It is preferable that the reactive functional group is an acid anhydride group, an amine group or a hydroxyl group. The amine group is not particularly limited and may be any one of a primary amino group, a secondary amino group and a tertiary amino group. The hydroxyl group may be a phenolic hydroxyl group or a hydroxyl group other than the phenolic hydroxyl group. Using the imide oligomer having such a reactive functional group allows the heat resistance of the insulating resin sheet to be easily improved and makes it easier to suppress warpage. An acid anhydride group or a phenolic hydroxyl group are preferred as the reactive functional group the imide oligomer has from the viewpoint of storage stability and heat resistance.

The imide oligomer has a molecular weight of preferably 500 to 10,000. A molecular weight in that range allows the heat resistance of the insulating resin sheet to be easily improved and makes it easier to suppress warpage. The imide oligomer has a molecular weight of preferably 700 to 7,000, and more preferably 900 to 5,000. The above imide oligomer has a molecular weight of preferably 500 or more, more preferably 700 or more, and further preferably 900 or more, and preferably 10,000 or less, more preferably 7,000 or less, and further preferably 5,000 or less.

The molecular weight refers to the number-average molecular weight measured by gel permeation chromatography (GPC) in terms of polystyrene. Examples of columns used for measuring the number-average molecular weight by GPC in terms of polystyrene include JAIGEL-2H-A (made by Japan Analytical Industry).

More specifically, the molecular weight may be measured using tetrahydrofuran as a solvent at room temperature under conditions of a flow rate of 1 mL/ minute. The solvent is not particularly limited as long as the sample to be measured can be dissolved in the solvent. The flow rate may be selected depending on the column and the apparatus.

Examples of imide oligomers according to the present invention includes an imide oligomer having a segment derived from acid dianhydride represented by the following formula (1) and a segment derived from a polyamine compound. In that case it is preferable that the imide oligomer has a segment derived from acid dianhydride represented by the formula (1) at an end of the main chain. It is more preferable that the imide oligomer has the segment at both ends of the main chain. Furthermore, examples of polyamine compounds above include an aromatic diamine compound, an

aliphatic diamine compound and an aliphatic triamine compound.

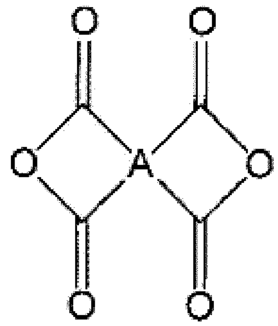
(1)

In the formula (1), A is a tetravalent group represented by the following formula (3-1) or the following formula (3-2).

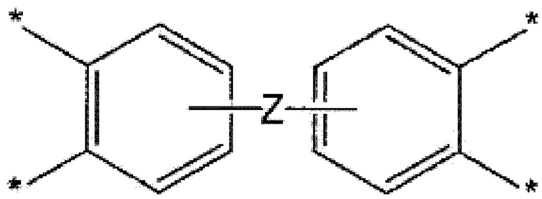
(3 − 1)

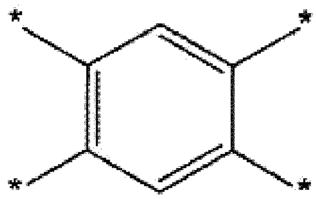
(3 − 2)

In the formula (3-1) and the formula (3-2), * means the position of the bond. In the formula (3-1), Z is a dangling bond, an oxygen atom, a carbonyl group, a sulfur atom, a sulfonyl group, a linear or branched divalent hydrocarbon group which optionally has an oxygen atom at the position of the bond, or a divalent group having an aromatic ring which optionally has an oxygen atom at the position of the bond. The hydrogen atom in the aromatic ring in the formula (3-1) and the formula (3-2) may be substituted.

Examples of acid dianhydrides represented by the above formula (1) include pyromellitic dianhydride, 3,3'-oxydiphthalic dianhydride, 3,4'-oxydiphthalic dianhydride, 4,4'-oxydiphthalic dianhydride, 4,4'-(4,4'-isopropylidenediphenoxy)diphthalic anhydride, 4,4'-bis(3,4-dicarboxylphenoxy)diphenylether, p-phenylenebis(trimellitate anhydride), 2,3,3',4'-biphenyltetracarboxylic dianhydride, 3,3',4,4'-biphenyltetracarboxylic dianhydride and 4,4'-carbonyldiphthalic dianhydride. Of them, 4,4'-(4,4'-isopropylidenediphenoxy)diphthalic anhydride, 3,4'-oxydiphthalic dianhydride, 4,4'-oxydiphthalic dianhydride and 4,4'-carbonyldiphthalic dianhydride are preferred because they allow the softening point and solubility of the imide oligomer to be controlled, and have excellent heat resistance and are readily available. In particular, 4,4'-(4,4'-isopropylidenediphenoxy)diphthalic anhydride is particularly preferred.

Examples of polyamine compounds described above include an aromatic polyamine compound and an aliphatic polyamine compound. Of them, an aromatic polyamine compound is preferred. Use of an imide oligomer having a segment derived from an aromatic polyamine compound makes it easier to obtain an insulating resin sheet with excellent heat resistance.

An aromatic diamine compound represented by the following formula (2) is preferred as the aromatic polyamine compound.

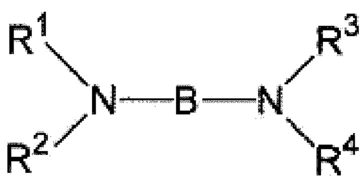
(2)

In the formula (2), B is a divalent group represented by the following formula (4-1) or the following formula (4-2). $R^1$ to $R^4$ are each independently a hydrogen atom or a monovalent hydrocarbon group.

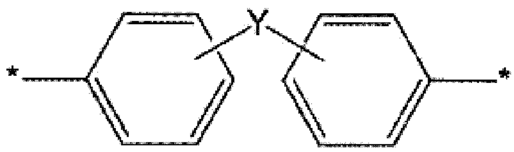
(4 − 1)

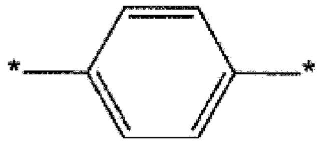
(4 − 2)

In the formula (4-1) and the formula (4-2), * means the position of the bond. In the formula (4-1), Y is a dangling bond, an oxygen atom, a carbonyl group, a sulfur atom, a sulfonyl group, a linear or branched divalent hydrocarbon group which optionally has an oxygen atom at the position of the bond, or a divalent group having an aromatic ring which optionally has an oxygen atom at the position of the bond. In the phenylene group of the formula (4-1) and the formula (4-2), part or all of the hydrogen atoms may be substituted by a hydroxyl group or a monovalent hydrocarbon group.

Examples of aromatic diamine compounds represented by the formula (2) include 3,3'-diaminodiphenylmethane, 3,4'-diaminodiphenylmethane, 4,4'-diaminodiphenylmethane, 3,3'-diaminodiphenylether, 3,4'-diaminodiphenylether, 4,4'-diaminodiphenylether, 1,2-phenylenediamine, 1,3-phenylenediamine, 1,4-phenylenediamine, 3,3'-diaminodiphenylsulfone, 4,4'-diaminodiphenylsulfone, bis(4-(3-aminophenoxy)phenyl)sulfone, bis(4-(4-aminophenoxy)phenyl)sulfone, 1,3-bis(3-aminophenoxy)benzene, 1,3-bis(4-aminophenoxy)benzene, 1,4-bis(4-aminophenoxy)benzene, bis(4-(4-aminophenoxy)phenyl)methane, 2,2-bis(4-(4-aminophenoxy)phenyl)propane, 1,3-bis(2-(4-aminophenyl)-2-propyl)benzene, 1,4-bis(2-(4-aminophenyl)-2-propyl)benzene, 3,3'-diamino-4,4'-dihydroxyphenylmethane, 4,4'-diamino-3,3'-dihydroxyphenylmethane, 3,3'-diamino-4,4'-dihydroxyphenylether, bisaminophenylfluorene, bistoluidinefluorene, 4,4'-bis(4-aminophenoxy)biphenyl, 4,4'-diamino-3,3'-dihydroxyphenylether, 3,3'-diamino-4,4'-dihydroxybiphenyl, 4,4'-diamino-2,2'-dihydroxybiphenyl and 3,3'-dihydroxybenzidine. Of them, 3,4'-diaminodiphenylether, 4,4'-diaminodiphenylether, 1,2-phenylenediamine, 1,3-phenylenediamine, 1,4-phenylenediamine, bis(4-(3-aminophenoxy)phenyl)sulfone, bis(4-(4-aminophenoxy)phenyl)sulfone, 1,3-bis(2-(4-aminophenyl)-2-propyl)benzene, 1,3-bis(3-aminophenoxy)benzene, 1,4-bis(2-(4-aminophenyl)-2-propyl)benzene, 3,3'-dihydroxybenzidine are preferred, and 1,3-bis(3-aminophenoxy)benzene is more preferred because they allow the softening point and solubility of the imide oligomer to be controlled, and have excellent heat resistance and are readily available.

Examples of aliphatic polyamine compounds include an aliphatic diamine compound and aliphatic triamine compound.

Examples of aliphatic diamine compounds and aliphatic triamine compounds include dimer diamine, hydrogenated dimer diamine, trimer triamine, hydrogenated trimer triamine, 1,4-butanediamine, 1,6-hexanediamine, 1,8-octanediamine, 1,9-nonanediamine, 1,10-decanediamine, 1,11-undecanediamine, 1,12-dodecanediamine, 1,14-tetradecanediamine, 1,16-hexadecanediamine, 1,18-octadecanediamine, 1,20-eicosanediamine, 2-methyl-1,8-octanediamine, 2-methyl-1,9-nonanediamine, 2,7-dimethyl-1,8-octanediamine, 3,3'-diamino-N-methyldipropylamine, 3,3'-diaminodipropylamine, diethylene triamine, bis(hexamethylene)triamine, 2,2'-bis(methylamino)-N-methyldiethylamine, 2,2'-oxybis(ethylamine), 3,3'-oxybis(propylamine), 1,2-bis(2-aminoethoxy)ethane, 1,3-bis(aminomethyl)cyclohexane, 1,4-bis(aminomethyl)cyclohexane, cyclohexanediamine, methylcyclohexanediamine and isophoronediamine.

Examples of commercially available aliphatic diamine compounds and aliphatic triamine compounds include Versamine 551 and Versamine 552 made by BASF, Priamine 1071, Priamine 1073, Priamine 1074 and Priamine 1075 made by Croda.

Examples of methods for producing the imide oligomer having an acid anhydride group as a reactive functional group include a method in which acid dianhydride represented by the above formula (1) is reacted with a polyamine compound described above, such as an aromatic diamine compound, an aliphatic diamine compound and an aliphatic triamine compound.

Specific examples of methods for reacting acid dianhydride represented by the above formula (1) and a polyamine compound will be described below.

First the polyamine compound is previously dissolved in a solvent in which amic acid oligomer resulting from a reaction can be dissolved (e.g., N-methylpyrrolidone, dimethylformamide, dimethylacetamide), and acid dianhydride represented by the above formula (1) is added to the resulting solution and allowed to react therewith to give a solution of an amic acid oligomer. Next, the amic acid oligomer is recovered by removing the solvent from the resulting solution

of the amic acid oligomer by heating or reducing pressure, or by reprecipitating the amic acid oligomer by adding the solution of the amic acid oligomer to a poor solvent such as water, methanol and hexane. The amic oligomer is heated at about 200°C or more for 1 hour or more to let the imidization reaction proceed. By adjusting the molar ratio between acid dianhydride represented by the formula (1) and polyamine and the condition of imidization, an imide oligomer having the desired number-average molecular weight and having an acid anhydride group at both ends as a reactive functional group may be obtained.

The imide oligomer according to the present invention may comprise a segment derived from acid dianhydride represented by the above formula (1) and a segment derived from a phenolic hydroxyl group-containing monoamine represented by the following formula (5).

The imide oligomer according to the present invention may also comprise a segment derived from acid dianhydride represented by the above formula (1), a segment derived from the polyamine compound described above and a segment derived from a phenolic hydroxyl group-containing monoamine represented by the following formula (5).

In these cases, the imide oligomer has the segment derived from a phenolic hydroxyl group-containing monoamine represented by the following formula (5) preferably at an end of the main chain, and more preferably at both ends of the main chain.

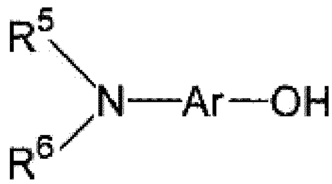

(5)

In the formula (5), Ar is a divalent aromatic group which may be substituted, and $R^5$ and $R^6$ are each independently a hydrogen atom or a monovalent hydrocarbon group.

Examples of phenolic hydroxyl group-containing monoamine represented by the formula (5) include 3-aminophenol, 4-aminophenol, 4-amino-o-cresol, 5-amino-o-cresol, 4-amino-2,3-xylenol, 4-amino-2,5-xylenol, 4-amino-2,6-xylenol, 4-amino-1-naphthol, 5-amino-2-naphthol, 6-amino-1-naphthol and 4-amino-2,6-diphenylphenol. Of them, 3-aminophenol, 4-aminophenol, 4-amino-o-cresol and 5-amino-o-cresol are preferred because they provide a cured product having excellent availability and storage stability and high glass transition temperature.

Examples of methods for producing an imide oligomer having a hydroxyl group as a reactive functional group include the following methods.

Specifically, examples include a method in which acid dianhydride represented by the above formula (1) and phenolic hydroxyl group-containing monoamine represented by the above formula (5) are reacted, and a method in which after reacting acid dianhydride represented by the above formula (1) and the polyamine compound described above, the resultant is reacted with phenolic hydroxyl group-containing monoamine represented by the above formula (5).

A specific example of methods in which acid dianhydride represented by the above formula (1) and phenolic hydroxyl group-containing monoamine represented by the above formula (5) are reacted will be described below.

First phenolic hydroxyl group-containing monoamine represented by the above formula (5) is previously dissolved in a solvent in which amic acid oligomer resulting from a reaction can be dissolved (e.g., N-methylpyrrolidone, dimethylformamide, dimethylacetamide), and acid dianhydride represented by the above formula (1) is added to the resulting solution and allowed to react therewith to give a solution of an amic acid oligomer. Next, the amic acid oligomer is recovered by removing the solvent from the resulting solution of the amic acid oligomer by heating or reducing pressure, or by reprecipitating the amic acid oligomer by adding the solution of the amic acid oligomer to a poor solvent such as water, methanol and hexane. The amic oligomer is heated at about 200°C or more for 1 hour or more to let the imidization reaction proceed. By adjusting the molar ratio between acid dianhydride represented by the above formula (1) and phenolic hydroxyl group-containing monoamine represented by the above formula (5) and the condition of imidization, an imide oligomer having the desired number-average molecular weight and having a phenolic hydroxyl group at both ends as a reactive functional group may be obtained.

A specific example of methods in which after reacting acid dianhydride represented by the above formula (1) and the polyamine compound, the resultant is reacted with phenolic hydroxyl group-containing monoamine represented by the above formula (5) will be described below.

First the polyamine compound is previously dissolved in a solvent in which amic acid oligomer resulting from a reaction can be dissolved (e.g., N-methylpyrrolidone, dimethylformamide, dimethylacetamide), and acid dianhydride represented by the above formula (1) is added to the resulting solution and allowed to react therewith to give a solution of an amic acid oligomer (A) having an acid anhydride group at both ends. Next, the amic acid oligomer (A) is recovered by removing the solvent from the resulting solution of the amic acid oligomer (A) by heating or reducing pressure, or by reprecipitating the amic acid oligomer (A) by adding the solution of the amic acid oligomer (A) to a poor solvent such as

water, methanol and hexane. The amic acid oligomer (A) is heated at about 200°C or more for 1 hour or more to let the imidization reaction proceed.

The imide oligomer having an acid anhydride group at both ends as a reactive functional group prepared as described above is dissolved in a solvent (e.g., N-methylpyrrolidone, dimethylformamide, dimethylacetamide) again, and phenolic hydroxyl group-containing monoamine represented by the above formula (5) is added thereto and allowed to react to prepare a solution of an amic acid oligomer (B). The amic acid oligomer (B) is recovered by removing the solvent from the resulting solution of the amic acid oligomer (B) by heating or reducing pressure, or by reprecipitating the amic acid oligomer (B) by adding the solution of the amic acid oligomer (B) to a poor solvent such as water, methanol and hexane. The amic oligomer (B) is heated at about 200°C or more for 1 hour or more to let the imidization reaction proceed. By adjusting the molar ratio between acid dianhydride and a polyamine compound represented by the above formula (1) and phenolic hydroxyl group-containing monoamine represented by the above formula (5) and the condition of imidization, an imide oligomer having the desired number-average molecular weight and having a hydroxyl group at both ends as a reactive functional group may be obtained.

The method for producing the imide oligomer having an amine group as a reactive functional group is not particularly limited, and examples thereof include a method in which an imide oligomer having an acid anhydride group at an end is prepared by the above method, and the imide oligomer is reacted with a polyamine compound (e.g., an aromatic diamine compound). Another method is a method in which the molar ratio between the acid anhydride and the polyamine compound is adjusted to an appropriate molar ratio when producing the imide oligomer by the above method.

The imide oligomer has an imidization ratio of preferably 70% or more. An imidization ratio of 70% or more can provide an insulating resin sheet with an excellent heat resistance. The imide oligomer has an imidization ratio of more preferably 75% or more, and further preferably 80% or more. Although the imide oligomer does not have the upper limit of the imidization ratio, the upper limit is substantially 98%.

The above "imidization ratio" may be determined by Fourier transform infrared spectroscopy (FT-IR). More specifically, the imidization ratio is measured by attenuated total reflection method (ATR method) using a Fourier transform infrared spectroscope and determined from the peak absorbance area derived from the carbonyl group in amic acid at around 1660cm$^{-1}$ by the following formula. Examples of Fourier transform infrared spectroscopes above include UMA 600 (made by Agilent Technologies). The "peak absorbance area of amic acid oligomer" means the absorbance area of the amic acid oligomer obtained by removing solvent without the imidization step in the above methods for producing an imide oligomer. The above solvent may be removed by evaporation.

$$\text{Imidization ratio (\%)} = 100 \times (1-(\text{peak absorbance area after imidization})/(\text{peak absorbance area of amic acid oligomer}))$$

The "imidization ratio" as used herein means the actual amount of reaction based on the theoretical amount of reaction when imide groups are formed in the reaction between acid anhydride groups and amine groups.

The content of the imide oligomer in the curable resin composition according to the present invention is not particularly limited, and is preferably 10% by volume or more, more preferably 15% by volume or more and further preferably 20% by volume or more, and preferably 50% by volume or less, more preferably 40% by volume or less, and further preferably 30% by volume or less. When the content of the imide oligomer is in this range, heat resistance of the insulating resin sheet is improved and it is easier to suppress warpage of substrates. The content of the imide oligomer in the curable resin composition is the same as the content of the imide oligomer in the insulating resin sheet.

A curing agent other than the imide oligomer described above may be used in combination with the imide oligomer to the extent that the effect of the present invention is not impaired. The content of the imide oligomer is preferably 5 to 100% by mass, more preferably 20 to 100% by mass, and further preferably 40 to 100% by mass based on the total amount of the curing agent. When the amount of the imide oligomer is the lower limit or more, it is easier to suppress warpage and is easier to improve heat resistance.

Examples of curing agents other than the imide oligomer include a cyanate ester compound (a cyanate ester curing agent), an amine compound (an amine curing agent), a thiol compound (a thiol curing agent), a phosphine compound, a dicyandiamide, a phenol compound (a phenol curing agent), acid anhydride, an active ester compound, a carbodiimide compound (a carbodiimide curing agent) and a benzoxazine compound (a benzoxazine curing agent).

[Insulating heat dissipating filler]

The curable resin composition comprises an insulating heat dissipating filler having a thermal conductivity of 10 W/m·K or more. Inclusion of the heat dissipating filler improves thermal conductivity and insulation properties of the insulating resin sheet. Furthermore, inclusion of the insulating heat dissipating filler suppresses warpage of the insulating

resin sheet. This is considered to be because the insulating heat dissipating filler improves heat dissipation and makes heat in the sheet uniform, and thus uneven cross-linking is less likely to occur in the thermosetting resin.

The insulating heat dissipating filler has a thermal conductivity of preferably 15 W/m·K or more, and more preferably 20 W/m·K or more. The upper limit of the thermal conductivity of the insulating heat dissipating filler is not particularly limited, and the upper limit may be, for example, 300 W/m·K or less, or 250 W/m·K or less.

For the thermal conductivity of the insulating heat dissipating filler, for example, a cross-section of the filler obtained by cutting by a cross section polisher may be measured by a periodic heating thermoreflectance method using a thermal microscope made by Bethel.

The average particle size of the insulating heat dissipating filler is not particularly limited, and is preferably 0.1 μm or more, more preferably 0.5 μm or more, and further preferably 1 μm or more. The insulating heat dissipating filler has an average particle size of 100 μm or less, more preferably 60 μm or less, and further preferably 40 μm or less.

For the average particle size of the insulating heat dissipating filler, the surface of a cross section of the insulating resin sheet after curing is exposed, and the cross-section exposed is observed by a scanning electron microscope (SEM) to obtain an observation image, and the major axis of 200 random primary particles of the insulating heat dissipating filler is measured and the average is defined as the average particle size.

Examples of insulating heat dissipating fillers include an inorganic filler include alumina, aluminum nitride, boron nitride, magnesium oxide, diamond and silicon carbide. Use of such insulating heat dissipating fillers provides insulation properties necessary for the insulating resin sheet and also improves thermal conductivity. One insulating heat dissipating filler may be used alone, or two or more of them may be used in combination.

Of the above, alumina, diamond and boron nitride are preferred, and boron nitride is more preferred as the insulating heat dissipating filler from the viewpoint of suppression of warpage while improving thermal conductivity and insulation properties.

It is preferable that boron nitride includes aggregate particles of boron nitride. The aggregate particles of boron nitride refer to aggregate particles formed by aggregation of primary particles.

For the aggregate particles of boron nitride, whether they are aggregated or not may be typically determined, for example, by observation of the cross-section by SEM. The form of aggregate particles of boron nitride may be maintained, or the aggregate particles may be deformed, destroyed or disintegrated, through various steps including press molding. Aggregate particles of boron nitride are usually not oriented and form a lump even when they are deformed, destroyed or disintegrated through the steps including press molding after mixing with the thermosetting resin. Thus, observation of the cross section described above suggests the presence of aggregate particles of boron nitride, allowing determination of whether particles are aggregated or not.

The aggregate particles of boron nitride mixed to the insulating resin sheet have an average particle size of preferably 5 μm or more and more preferably 10 μm or more, and preferably 200 μm or less, more preferably 150 μm or less, and further preferably 100 μm or less from the viewpoint of effective improvements in insulation properties and thermal conductivity.

The average particle size of the aggregate particles may be measured by a laser diffraction/scattering method. For the method of calculation of the average particle size, the particle size of aggregate particles when the cumulative volume is 50% (d50) will be adopted as the average particle size.

The method for producing aggregate particles of boron nitride is not particularly limited, and aggregate particles of boron nitride may be produced by a known method. For example, aggregate particles of boron nitride may be prepared by aggregating (granulating) primary particles which have been previously prepared. Specific examples thereof include spray drying and fluid bed granulation. Spray drying can be classified into two-fluid nozzle type, disc type (also called rotary type) and ultrasonic nozzle type depending on the type of sprays. Any of these types may be used.

Furthermore, the step of granulation is not always necessary in the method for producing aggregate particles of boron nitride. For example, aggregate particles may also be formed by natural aggregation of primary particles of boron nitride in the course of growth of the crystal of boron nitride which has been crystallized by a known method

Examples of aggregate particles of boron nitride also include "UHP-G1H" made by SHOWA DENKO K.K.

The content of the insulating heat dissipating filler in the curable resin composition is not particularly limited and is, for example, 30% by volume or more. A content of 30% by volume or more provides the insulating resin sheet with good thermal conductivity. The content of the insulating heat dissipating filler in the curable resin composition is preferably 80% by volume or less. A content of 80% by volume or less improves adhesiveness of the insulating resin sheet to metal plates and the like. To improve thermal conductivity and insulating properties, the content of the insulating heat dissipating filler in the curable resin composition is more preferably 50% by volume or more, and further preferably 55% by volume or more. The content of the insulating heat dissipating filler in the curable resin composition is the same as the content of the insulating heat dissipating filler in the insulation resin sheet.

[Curing accelerator]

A curing accelerator may be used for the curable resin composition. Use of a curing accelerator increases the rate of curing to allow the curable resin composition to be cured fast, and makes the cross-linking structure in the insulating resin sheet uniform. Furthermore, the number of unreacted functional groups is reduced and as a result the cross-linking density is increased.

A curing accelerator is not particularly limited, and a known curing accelerator may be used as the curing accelerator. Specific examples thereof include an anionic curing accelerator such as an imidazole compound, a cationic curing accelerator such as an amine compound, a curing accelerator other than the anionic or cationic curing accelerator, such as a phosphorus compound and an organic metal compound, and a radical curing accelerator such as peroxide. The content of the curing accelerator in the curable resin composition is, for example, 0.1 to 8% by volume, and preferably 0.3 to 5% by volume.

One curing accelerator may be used alone, or two or more of them may be used in combination.

[Other additives]

The curable resin composition according to the present invention may also include other additives such as a dispersant, a coupling agent such as a silane coupling agent, a flame regardant, an antioxidant, an ion scavenger, a tackifier, a plasticizer, a thixotropic agent and a colorant.

[Thickness]

The insulating resin sheet of the present invention has a thickness of 50 μm or more and 500 μm or less. When the insulating resin sheet has a thickness of less than 50 μm, maintaining certain insulation properties is difficult. When the insulating resin sheet has a thickness of more than 500 μm, thinning of circuit boards or semiconductor devices described later is difficult, and warpage of substrates is increased. The insulating resin sheet has a thickness of preferably 60 μm or more, more preferably 70 μm or more, and preferably 450 μm or less and more preferably 400 μm or less.

The insulating resin sheet of the present invention may have a single layer structure or a multiple layer structure. More specifically, a single layer insulating resin sheet may be prepared using the above curable resin composition, or two or more resin layers may be formed using the above curable resin composition and the resin layers are laminated to form a multilayer insulating resin sheet.

Furthermore, a resin layer made of a composition other than the curable resin composition described above may be stacked on one or both surfaces of the insulating resin sheet as long as the effect of the present invention is not impaired.

[Laminate]

As shown in Fig. 1, the laminate of the present invention comprises the insulating resin sheet 10 of the present invention, a metal base plate 11 and a metal plate 12. The laminate 13 comprises the insulating resin sheet 10 and the metal plate 12 on the metal base plate 11 in that order. The insulating resin sheet 10 is preferably an insulating resin sheet after curing.

It is preferable that the metal base plate 11 and the metal plate 12 have a thermal conductivity of 10 W/m·K or more, respectively so that the two are effective as a thermal conductor. Examples of materials used for them include metal such as aluminum, copper, gold and silver, and a graphite sheet. To improve thermal conductivity more effectively, aluminum, copper and gold are preferred, and aluminum and copper are more preferred.

The metal base plate 11 has a thickness of preferably 0.1 to 5 mm. The metal plate 12 has a thickness of preferably 10 to 3,000 μm, and more preferably 10 to 1,500 μm. The metal plate also includes a plate such as a copper plate and foil such as copper foil.

It is preferable that the laminate 13 is used as a circuit board. When the laminate 13 is used as a circuit board, the metal plate 12 in the laminate 13 may have a circuit pattern. A circuit patten suitable for elements mounted on the circuit board may be formed appropriately. Circuit patterns may be formed by etching or the like, although the method is not limited thereto. In the circuit board, the metal base plate 11 is used as a heat sink.

[Semiconductor device]

The present invention also provides a semiconductor device comprising the above laminate. More specifically, as shown in Fig. 2, the semiconductor device 15 comprises a laminate 13 comprising an insulating resin sheet 10, a metal base plate 11 and a metal plate 12, and a semiconductor element 14 formed on the metal plate 12 of the laminate

13. The metal plate 12 may have a circuit pattern by patterning by etching and the like.

Although two semiconductor elements 14 are shown in Fig. 2, the number of the semiconductor elements 14 is not particularly limited as long as the semiconductor device has one or more semiconductor elements. Other electronic parts (not shown) such as a transistor may also be mounted on the metal plate 12 in addition to the semiconductor element 14. The semiconductor element 14 is connected to the metal plate 12 through a conductive connector 16 formed on the metal plate 12. The conductive connector 16 may be formed by soldering. Furthermore, a sealing resin 19 is provided on the side of the metal plate 12 of the laminate 13. At least the semiconductor element 14 may be sealed with the sealing resin 19, and where necessary the metal plate 12 may also be sealed with the sealing resin 19 together with the semiconductor element 14.

It is preferable that at least one semiconductor element 14 is a power element (i.e., a power semiconductor element), although this is not particularly limited. Thus, it is preferable that the semiconductor device 15 is a power module. Power modules are used, for example, for an inverter.

Furthermore, power modules are used in an industrial equipment such as an elevator and an uninterruptible power supply (UPS), but the application is not particularly limited.

A lead 20 is connected to the metal plate 12. The lead 20 is extended to the outside from the sealing resin 19 and connects the metal plate 12 to an external device, for example. Wire 17 may be connected to the semiconductor element 14. As shown in Fig. 2, the wire 17 may connect the semiconductor element 14 to another semiconductor element 14, the metal plate 12, the lead 20 and the like.

Heat is generated in the semiconductor element 14 when the semiconductor element 14 is operated by supplying electric power thereto through lead 20 and the like, and the heat generated in the semiconductor element 14 is transferred to the metal base plate 11 through the insulating resin sheet 10 and released from the metal base plate 11. The metal base plate 11 may be connected to a heat sink having heat-dissipation fins as necessary.

The semiconductor device 15 may be produced through the step of reflow in the method of production. More specifically, in the method for producing the semiconductor device 15, a laminate 13 is first prepared, and a conductive connector 16 is formed on the metal plate 12 of the laminate 13 by solder printing, and a semiconductor element 14 is mounted on the conductive connector 16. Then, the laminate 13 on which the semiconductor element 14 is mounted is passed through a reflow furnace and heated in the reflow furnace to connect the semiconductor element 14 to the metal plate 12 with the conductive connector 16. The temperature in the reflow furnace is not particularly limited, and for example about 200 to 300°C. In the method for producing the semiconductor device 15, a sealing resin 19 may be stacked on the laminate 13 after the step of reflow to seal the semiconductor element 14. Before sealing with the sealing resin 19, wire 17, lead 20 and the like are appropriately installed.

The above shows embodiments in which the semiconductor element 14 is connected to the metal plate 12 in the step of reflow, but the semiconductor device is not limited to such embodiments, and for example, the laminate 13 (i.e., a circuit board) may be connected to another substrate (not shown) in the step of reflow.

[Method for producing insulating resin sheet and laminate]

The insulating resin sheet may be prepared by molding the curable resin composition described above in the form of a sheet. For example, a curable resin composition may be applied to or laminated on a support such as a release sheet, and then the composition may be molded into a sheet. When a laminate is produced, the curable resin composition may be applied to or laminated on a metal base plate and molded into a sheet. As used herein, the sheet refers to a thin and flat form whose thickness is small for the length and the width. Those formed on another member such as a support or a metal base plate in the form of a film or a layer also fall into the category of the sheet. Molding the curable resin composition into a sheet as described above provides an insulating resin sheet before curing.

The curable resin composition (the insulating resin sheet before curing) molded into a sheet by application or stacking may be cured in part or completely by heating and pressing using press molding or the like. Alternatively, the sheet may also be cured in part or completely before press molding. It is preferable that the sheet is cured in part or completely at the time of press molding. In particular, it is preferable that part of the insulating resin sheet is cured. When part of the insulating resin sheet is cured, the insulating resin sheet has improved storage properties. When the partly cured insulating resin sheet is used for preparing the laminate described later, the laminate can be molded more effectively.

Furthermore, when a laminate comprising an insulating resin sheet, a metal base plate and a metal plate is produced, the curable resin composition which has been previously formed into sheet (the insulating resin sheet before curing) is put between the metal base plate and the metal plate, and the same is heated and pressurized by press molding, and the laminate can be produced by boding the metal base plate to the metal plate via the insulating resin sheet. It is preferable that the insulating resin sheet is cured by heating in press molding, while the insulating resin sheet may be cured in part or completely before press molding. In the laminate, it is most preferable that the insulating resin sheet is completely cured in its final product form. When cured completely, the laminate has stable insulating properties and heat resistance, improved glass transition temperature and thus have a stable quality.

Alternatively, an insulating resin sheet before curing is prepared by applying or stacking a curable resin composition to or on a metal base plate and then a metal plate is stacked thereon, and the insulating resin sheet is cured by heating and pressurizing by press molding or the like as needed, and the laminate may be produced by boding the metal plate to the metal base plate via the insulating resin sheet.

## Examples

Hereinafter the present invention will be described in detail with reference to Examples and Comparative Examples, but the present invention is not limited thereto.
The method for measuring and assessing properties are as follows.

[Molecular weight]

Gel permeation chromatography (GPC) measurement was performed and the number-average molecular weight of the imide oligomer was measured in terms of polystyrene using tetrahydrofuran as a solvent under conditions of room temperature and a flow rate of 1 mL/ minute. 100 μL of a 0.5% by weight THF solution was used as a measurement sample of the imide oligomer. The column used for the measurement was JAIGEL-2H-A (made by Japan Analytical Industry Co., Ltd).

[Thickness]

The thickness of the insulating resin sheet in the laminate prepared in Examples and Comparative Examples was measured.

[Thermal conductivity]

The respective laminates of Examples and Comparative Examples were cut into a 1 cm square, and carbon black was sprayed to both sides thereof to prepare a measurement sample. The thermal conductivity of the sample was measured using a measurement device "Hyper Flash" (made by NETZSCH, Model No. LFA467) by a laser flash method.

[Breakdown voltage]

A ϕ2 circular electrode was formed on the laminates (6 cm × 6 cm) prepared in Examples and Comparative Examples, and voltage was applied to the electrode at a rate of 20 kV/ minute. The voltage that caused the measurement sample to experience electrical breakdown was determined as breakdown voltage.

[Thermal decomposition temperature]

The laminates prepared in Examples and Comparative Examples were heat treated at a temperature of 150°C for 60 minutes. Then the insulating resin sheet was removed from the laminate and the thermal decomposition temperature was measured.
10 mg of the insulating resin sheet was precisely weighed by a thermogravimetric analyzer (TG/DTA7300 made by Hitachi High-tech Science Corporation). The temperature was increased from the starting temperature of 30°C to 550°C at 10°C/ minute and kept for 5 minutes under nitrogen atmosphere at a flow rate of 100 ml/ minute. The temperature at which the weight was reduced by 1% from the weight of the insulating resin sheet before measurement was defined as the thermal decomposition temperature.
For the above heat treatment, the entire laminate may be heat treated, or the insulating resin sheet may be heat treated. Or where necessary, the laminate may be sandwiched by a PET release sheet (thickness 40 μm) and then the resultant may be heat treated. When the laminate is heat treated with being sandwiched by a PET release sheet, the thermal decomposition temperature is measured after removing the insulating resin sheet from the sample.

[Glass transition temperature]

An insulating resin sheet was heat treated in the same manner as in the measurement of the thermal decomposition temperature described above. For the insulating resin sheet, the peak temperature in a tan δ curve obtained by increasing temperature from 0°C to 300°C using a dynamic viscoelasticity measuring device (RHEOVIBRON DDV-25GP made by A&D Company) at a temperature-increasing rate of 10°C/ minute at a frequency of 10 Hz with a distance between chucks of 24 mm was determined as the glass transition temperature.

[Assessment of warpage]

The curable resin composition of Examples and Comparative Examples was applied to a PET release sheet (thickness 40 μm) so that the thickness was 200 μm, and the composition was dried in an oven at 50°C for 10 minutes to form a sheet made of the curable resin composition (insulating resin sheet) on the PET release sheet. Then the PET release sheet was removed and the insulating resin sheet was sandwiched by the first metal layer (copper plate, thickness 50 μm) and a PET release sheet, and a laminate sample was prepared by vacuum pressing under conditions of a temperature of 150°C and a pressure of 10 MPa. The laminate sample has a size of 60 mm × 130 mm.
Warpage of the laminate sample prepared was measured at positions 10 mm, 65 mm and 120 mm from the end of the major axis in the direction of the minor axis using One Shot 3D Measuring Microscope made by Keyence Corporation. The highest point and the lowest point at the respective measurement positions were defined as the amount of warpage at the positions. The average of the amounts of warpage was defined as the warpage value. A larger warpage value means that the laminate sample including the insulating resin sheet has large warpage.
The components used in Examples and Comparative Examples are as follows.

(Thermosetting resin)

·Epoxy resin "EPICLON EXA-850CRP" made by DIC, liquid at 25°C
· Epoxy resin "EPICLON EXA-830CRP" made by DIC, liquid at 25°C

(Insulating heat dissipating filler)

· Boron nitride "UHP-G1H" made by SHOWA DENKO K.K., average particle size of aggregate particle 33 μm, thermal conductivity 60 W/m·K
· Alumina "AL35-75R" made by Nippon Steel Materials Co., Ltd., average particle size 35 μm, thermal conductivity 30 W/m·K
· Diamond Diamondo powder made by FUJIFILM Wako Chemicals, natural, average particle size 40 to 60 μm, thermal conductivity 2,000 W/m·K

(Additional filler)

· Silica "SO-G4" made by Admatechs Co., Ltd., thermal conductivity 1 W/m·K

(Curing agent)

· Imide oligomer (IMO-1)

IMO-1 was prepared as follows.
20 parts by weight of APB-N (made by Mitsui Fine Chemicals Inc., Co., Ltd.), which is 1,3-bis(3-aminophenoxy)benzene, was dissolved in 200 parts by weight of N-methylpyrrolidone (made by Wako Pure Chemical Industries, Ltd.). 20 parts by weight of 4,4'-(4,4'-isopropylidenediphenoxy)diphthalic anhydride (made by Tokyo Chemical Industry, Co., Ltd.) was added to the resulting solution. The mixture was allowed to react with stirring at 25°C for 2 hours to give a solution of amic acid oligomer. N-methylpyrrolidone was removed under reduced pressure from the resulting solution of amic acid oligomer and the resultant was heated at 300°C for 2 hours to give imide oligomer IMO-1 (imidization ratio 97%). The imide oligomer had an acid anhydride group at both ends and did not have a linear saturated hydrocarbon chain having 16 or more carbon atoms in the skeleton. The imide oligomer had a number-average molecular weight of 1,310.
· Imide oligomer (IMO-2)

IMO-2 was prepared as follows.

104 parts by weight of 4,4'-(4,4'-isopropylidenediphenoxy)diphthalic anhydride (made by Tokyo Chemical Industry, Co., Ltd.) was dissolved in 300 parts by weight of N-methylpyrrolidone ("NMP" made by Wako Pure Chemical Industries, Ltd.). A solution prepared by diluting 56.8 parts by weight of Priamine 1073 (made by Croda) in 100 parts by weight of N-methylpyrrolidone was added to the resulting solution. The mixture was allowed to react with stirring at 25°C for 2 hours to give a solution of an amic acid oligomer. N-methylpyrrolidone was removed under reduced pressure from the resulting solution of amic acid oligomer and the resultant was heated at 300°C for 2 hours to give imide oligomer IMO-2 (imidization ratio 93%). The imide oligomer had an acid anhydride group at both ends and a linear saturated hydrocarbon chain having 16 or more carbon atoms in the skeleton. The imide oligomer had a number-average molecular weight of 2,200.

· Imide oligomer (IMO-3)

IMO-3 was prepared as follows.

21.8 parts by weight of 3-aminophenol (made by Tokyo Chemical Industry, Co., Ltd.) was dissolved in 200 parts by weight of N-methylpyrrolidone (made by Tokyo Chemical Industry, Co., Ltd.). 17.2 parts by weight of 4,4'-(4,4'-isopropylidenediphenoxy)diphthalic anhydride (made by Tokyo Chemical Industry, Co., Ltd.) was added to the resulting solution. The mixture was allowed to react with stirring at 25°C for 2 hours to give a solution of amic acid oligomer. N-methylpyrrolidone was removed under reduced pressure from the resulting solution of amic acid oligomer and the resultant was heated at 300°C for 2 hours to give IMO-3 (imidization ratio 96%). The imide oligomer had a phenolic hydroxyl group at both ends and did not have a linear saturated hydrocarbon chain having 16 or more carbon atoms in the skeleton. The imide oligomer had a number-average molecular weight of 700.

· Imide oligomer (IMO-4)

IMO-4 was prepared as follows.

3.4 parts by weight of 3-aminophenol (made by Tokyo Chemical Industry, Co., Ltd.) was dissolved in 200 parts by weight of N-methylpyrrolidone (made by Tokyo Chemical Industry, Co., Ltd.). 13.1 parts by weight of IMO-1 (described above) was added to the resulting solution. The mixture was allowed to react with stirring at 25°C for 2 hours to give a solution of amic acid oligomer. N-methylpyrrolidone was removed under reduced pressure from the resulting solution of amic acid oligomer and the resultant was heated at 300°C for 2 hours to give IMO-4 (imidization ratio 94%). The imide oligomer had a phenolic hydroxyl group at both ends and did not have a linear saturated hydrocarbon chain having 16 or more carbon atoms in the skeleton. The imide oligomer had a number-average molecular weight of 1,560.

· Cyanate ester compound "BA-3000S" made by Lonza K.K.
· Isocyanuric acid-modified solid dispersible imidazole "2MZA" made by Shikoku Chemicals Corporation
· Acid anhydride "RIKACID HH" made by New Japan Chemicals Co., Ltd.
· Polyimide amide resin "VYLOMAX HR-15ET" made by TOYOBO Co., Ltd.

[Example 1]

A curable resin composition was prepared by mixing the thermosetting resin, the filler and the curing agent listed in Table 1 in the amount shown in Table 1. The curable resin composition was applied to a PET release sheet (thickness 40 μm) so that the thickness was 200 μm and dried in an oven at 50°C for 10 minutes to form an insulating resin sheet made of a curable resin composition on the PET release sheet. Then the PET release sheet was removed and the insulating resin sheet was sandwiched by the first metal layer (copper plate, thickness 500 μm) and the second metal layer (aluminum plate, thickness 1.0 mm). The resultant was vacuum-pressed under conditions of a temperature of 150°C and a pressure of 10 MPa to give a laminate in which the first metal layer, the insulating resin sheet and the second metal layer were stacked in that order.

[Examples 2 to 12, Comparative Examples 1 to 7]

A laminate was prepared in the same manner as in Example 1 except for changing the type and the amount of the components included in the curable resin composition and the thickness to those shown in Table 1.

Table 1

| | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|---|---|
| Thermosetting resin (% by volume) | 850CRP | 16.81 | 18.95 | 16.81 | 16.81 | 31.84 | 11.71 | 23.83 | 14.74 | | 23.1 | 17.8 | 17.8 | 20.05 | 39.01 | 24.13 | 16.81 | 16.81 | 24.13 | 35.84 |
| | 830CRP | | | | | | | | | 15.26 | | | | | | | | | | |
| Curing agent (% by volume) | IMO-1 | 23.22 | | 23.22 | 23.22 | 8.24 | 28.27 | | | 24.74 | 31.9 | 12.13 | 12.13 | | | | 23.22 | 23.22 | | 3.18 |
| | IMO-2 | | 21.03 | | | | | | | | | | | | | | | | | |
| | IMO-3 | | | | | | | 16.22 | | | | | | | | | | | | |
| | IMO-4 | | | | | | | | 25.25 | | | | | | | | | | | |
| | BA-3000S | | | | | | | | | | | | | 19.96 | | | | | | |
| | 2MZA | | | | | | | | | | | | | | 1 | | | | | 1 |
| | RIKACID HH | | | | | | | | | | | | | | | 15.92 | | | | |
| | HR-15ET | | | | | | | | | | | | | | | | | | 15.92 | |
| Filler (% by volume) | Boron nitride | 59.99 | 59.95 | | | 59.92 | 60.02 | 59.95 | 60.01 | 60 | 45 | 70 | | 59.99 | 59.99 | 59.95 | | 59.99 | 59.95 | 59.98 |
| | Alumina | | | 59.99 | | | | | | | | | 70 | | | | | | | |
| | Diamond | | | | 59.99 | | | | | | | | | | | | | | | |
| | Silica | | | | | | | | | | | | | | | | 59.99 | | | |
| Evaluation | Thickness of insulating resin sheet (μm) | 150 | 130 | 120 | 150 | 150 | 150 | 150 | 150 | 150 | 140 | 160 | 150 | 140 | 70 | 150 | 110 | 600 | 150 | 140 |
| | Thermal conductivity(W/m·K) | 8.04 | 8 | 2.3 | 2.67 | 7.6 | 8.4 | 8.12 | 7.82 | 8 | 4.5 | 12 | 3.6 | 8.44 | 8 | 10.31 | 0.821 | 7.5 | 7.3 | 7.6 |
| | Breakdown voltag (kV) | 11.06 | 11 | 0.91 | 1.22 | 11.6 | 10.5 | 10.2 | 10.7 | 11.1 | 14 | 4 | 0.75 | 12.28 | 11 | 10.8 | 5.69 | 15 | 6 | 11 |
| | Thermal decomposition temperature (°C) | 306.2 | 298 | 309.5 | 289.4 | 301.5 | 320 | 308.5 | 293.2 | 299.2 | 308.2 | 307.1 | 310.2 | 278.3 | 250 | 239.2 | 298.8 | 306 | 268 | 272.4 |
| | Warpage value(mm) | 2 | 1 | 3.96 | 2.3 | 2.8 | 2.6 | 4 | 3 | 1.5 | 3.85 | 1.7 | 3.28 | 5 | 7 | 1 | 13 | 5 | 3 | 5 |
| | Glass transition temperature (°C) | 175 | 130 | 172 | 169 | 168 | 193 | 205 | 185 | 165 | 175 | 175 | 170 | 158 | 160 | 75 | 160 | 175 | 185 | 164 |

The results show that the insulating resin sheets of Examples satisfying the requirement of the present invention are insulating, highly thermally conductive, highly heat resistant and have reduced warpage.

By contrast, the insulating resin sheets of Comparative Examples 1 to 3, 6 in which no imide oligomer was used, were poorly heat resistant with a thermal decomposition temperature of less than 280°C. Furthermore, the insulating resin sheet of Comparative Example 4, in which the insulating heat-dissipating filler having a thermal conductivity of 10 W/m·K or more was not included, had low thermal conductivity and a high warpage value. The insulating resin sheet of Comparative Example 5 with a thickness of more than 500 μm had a high warpage value. The insulating resin sheet of Comparative Example 7 was poorly heat resistant with a thermal decomposition temperature of less than 280°C and had a high warpage value.

Reference Signs List

10 Insulating resin sheet
11 Metal base plate
12 Metal plate
13 Laminate
14 Semiconductor element
15 Semiconductor device
16 Conductive connector
17 Wire
19 Sealing resin
20 Lead

**Claims**

1. An insulating resin sheet comprising a curable resin composition comprising a thermosetting resin, a curing agent and an insulating heat dissipating filler having a thermal conductivity of 10 W/m·K or more,

   the curing agent being an imide oligomer;
   a cured product thereof having a thermal decomposition temperature of 280°C or more; and
   the insulating resin sheet having a thickness of 50 μm or more and 500 μm or less.

2. The insulating resin sheet according to claim 1, wherein the content of the insulating heat dissipating filler is 50% by volume or more.

3. The insulating resin sheet according to claim 1 or 2, wherein the imide oligomer has a reactive functional group capable of reacting with the thermosetting resin at both ends or one end of the molecule, and the reactive functional group is an acid anhydride group, an amine group or a hydroxyl group.

4. The insulating resin sheet according to any one of claims 1 to 3, wherein the higher of the softening point and the melting point of the thermosetting resin is 150°C or less.

5. The insulating resin sheet according to any one of claims 1 to 4, wherein the imide oligomer does not have a linear saturated hydrocarbon chain having 16 or more carbon atoms in the skeleton.

6. The insulating resin sheet according to any one of claims 1 to 5, wherein the imide oligomer has a number average molecular weight of 500 to 10,000.

7. A laminate comprising the insulating resin sheet according to any one of claims 1 to 6, a metal base plate and a metal plate, wherein the laminate comprises the insulating resin sheet and the metal plate on the metal base plate in that order.

8. The laminate according to claim 7, wherein the laminate is a circuit board.

9. The laminate according to claim 7 or 8, wherein the metal plate has a circuit pattern.

**10.** A semiconductor device comprising the laminate according to any one of claims 7 to 9, and a semiconductor element provided on the metal plate.

Fig. 1

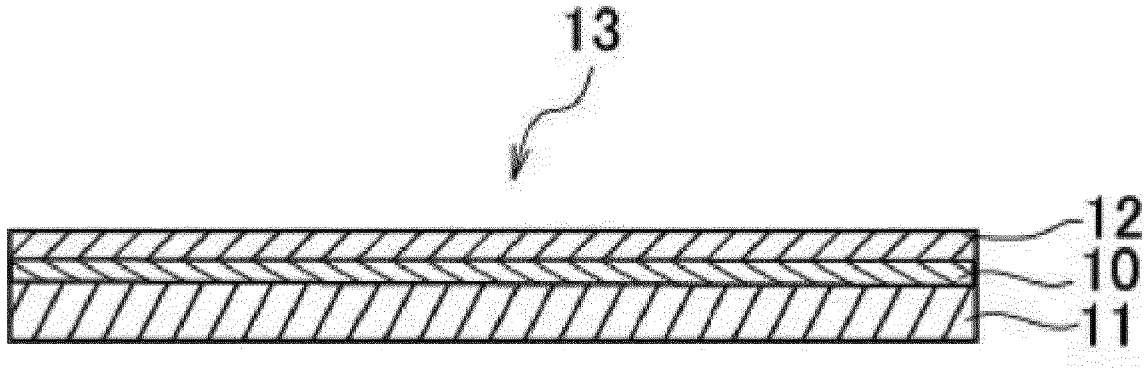


Fig. 2

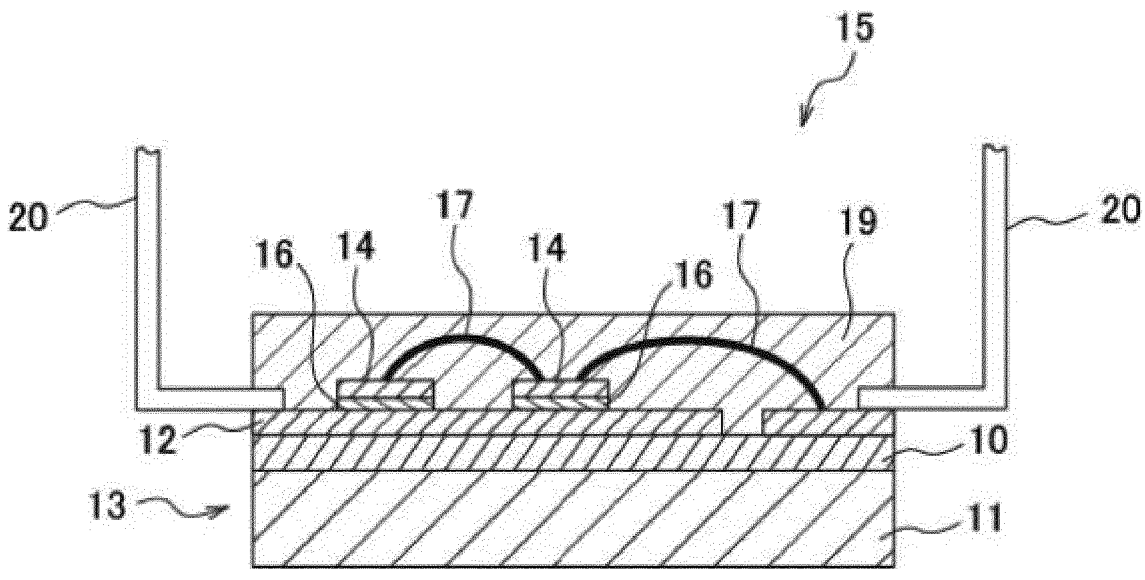

## INTERNATIONAL SEARCH REPORT

International application No.
**PCT/JP2022/017691**

**A. CLASSIFICATION OF SUBJECT MATTER**

***C09J 11/04***(2006.01)i; ***C09J 11/06***(2006.01)i; ***H01B 17/56***(2006.01)i; ***C08L 101/00***(2006.01)i; ***C09J 201/00***(2006.01)i; ***H01B 3/40***(2006.01)i; ***C08J 5/18***(2006.01)i; ***B32B 15/08***(2006.01)i; ***C08K 3/00***(2018.01)i; ***C09J 7/35***(2018.01)i
FI: C09J7/35; B32B15/08 J; C09J201/00; C09J11/06; C09J11/04; C08L101/00; C08K3/00; H01B3/40 C; H01B17/56 A; C08J5/18 CEZ

According to International Patent Classification (IPC) or to both national classification and IPC

**B. FIELDS SEARCHED**

Minimum documentation searched (classification system followed by classification symbols)

C09J11/04; C09J11/06; H01B17/56; C08L101/00; C09J201/00; H01B3/40; C08J5/18; B32B15/08; C08K3/00; C09J7/35

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-149910 A (LINTEC CORP.) 31 August 2017 (2017-08-31) paragraphs [0023]-[0034], [0044], [0069], [0088] | 1-10 |
| A | JP 2009-260232 A (HITACHI CHEMICAL CO. LTD.) 05 November 2009 (2009-11-05) entire text, all drawings | 1-10 |
| A | WO 2012/073851 A1 (TORAY INDUSTRIES, INC.) 07 June 2012 (2012-06-07) entire text, all drawings | 1-10 |

☐ Further documents are listed in the continuation of Box C.
☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2022** | **05 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/017691**

| Patent document cited in search report | Publication date (day/month/year) | Patent family member(s) | Publication date (day/month/year) |
|---|---|---|---|
| JP 2017-149910 A | 31 August 2017 | (Family: none) | |
| JP 2009-260232 A | 05 November 2009 | (Family: none) | |
| WO 2012/073851 A1 | 07 June 2012 | US 2013/0245160 A1<br>entire text, all drawings<br>EP 2647685 A1<br>CN 103228753 A<br>KR 10-2013-0141530 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6844066 B
- JP 6214336 B
- JP 2017149910 A
- WO 2019083006 A